# EUROPÄISCHE PATENTSCHRIFT

(11) **EP 4 054 310 B1**
(45) Veröffentlichungstag und Bekanntmachung des Hinweises auf die Patenterteilung: **24.09.2025**
(21) Anmeldenummer: 20800065.3
(22) Anmeldetag: 27.10.2020
(51) Int. Cl.: A01D 34/416

(54) **MÄH- UND/ODER TRIMMVORRICHTUNG**
CUTTING AND/OR TRIMMING DEVICE
DISPOSITIF DE COUPE ET/OU D'ELAGAGE

(30) Priorität: 07.11.2019 DE 102019130101
(43) Veröffentlichungstag der Anmeldung: 14.09.2022
(73) Patentinhaber: Ilmer Maschinenbau GmbH, 39020 Castelbello Ciardes (IT)
(72) Erfinder: ILMER, Oliver, 39020 Castelbello-Ciardes (IT)
(74) Vertreter: Kreuels, Justus
(86) Internationale Anmeldenummer: PCT/EP2020/080200
(87) Internationale Veröffentlichungsnummer: WO 2021/089371

(56) Entgegenhaltungen:
- EP-A1- 3 138 376
- EP-B1- 2 874 484
- IT-A1- VR20 090 065
- US-A- 4 104 797
- US-A- 4 476 632

## Beschreibung

### Stand der Technik

Die Erfindung betrifft eine Mäh- und/oder Trimmvorrichtung nach dem Oberbegriff des Anspruchs 1.

Aus der Druckschrift EP 2874484 B1 ist bereits eine Mäh- und/oder Trimmvorrichtung mit einer Antriebswelle und einer Mehrzahl von Modulen bekannt, welche jeweils ein in einem gelösten Zustand bezüglich der Antriebswelle axial verschieb bar sind und jeweils ein in dem gelösten Zustand relativ zur Antriebswelle drehbares ringförmiges Gehäuseelement zu einem Nachnehmen eines Schneidfadens umfassen.

In der Druckschrift EP 3 138 376 A1 ist ein Unkrautrotor beschrieben. der eine rohrförmige Welle aufweist, die sich entlang einer Längsachse erstreckt, der zum Drehen um die Längsachse motorisiert ist und der eine zylindrische Struktur und ein austauschbares Schutzrohr umfasst, welches um die zylindrische Struktur herum angeordnet ist und so konfiguriert ist, dass es auf dem Boden gleitet.

In der Druckschrift US 4 104 797 A ist eine Schneidanordnung in Form eines Drehkopfes für einen Sichelrasenmäher, Kantenschneider oder Trimmer beschrieben.

In der Druckschrift IT VR20 090 065 A1 ist eine Vorrichtung zum Entfernen von Schösslingen einer Pflanze beschrieben.

Die Aufgabe der Erfindung besteht insbesondere darin, eine gattungsgemäße Vorrichtung vorteilhaft weiterzuentwickeln. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von Mäh- und/oder Trimmvorrichtung, insbesondere einem Fadenrotor, mit einer Antriebswelle, mit einem ersten Modul und mit zumindest einem zweiten Modul, welche über die Antriebswelle um eine Rotationsachse rotierend atreibbar sind und welche jeweils eine Fadenspule zu einer Aufnahme und Bevorratung zumindest eines Schneidfadens und eine Gehäuseeinheit mit zumindest einer Fadendurchlassöffnung zu einem Durchlass eines losen Endes des Schneidfadens, insbesondere zu Mäh- und/oder Trimmzwecken, umfassen.

Es wird vorgeschlagen, dass die Gehäuseeinheit des ersten Moduls zumindest ein Gegenverbindungselement aufweist, welches zu einer formschlüssigen Verbindung mit einem Verbindungselement der Antriebswelle und zu einem Empfang eines Antriebsdrehmoments von der Antriebswelle vorgesehen ist.

Durch die erfindungsgemäße Ausgestaltung kann eine gattungsgemäße Vorrichtung vorteilhaft weiterentwickelt werden. Insbesondere kann eine Effizienz bei einem Betrieb der Mäh- und/oder Trimmvorrichtung vorteilhaft gesteigert werden. Insbesondere können vorteilhaft längere Betriebszeiten und verkürzte Wartungszeiten erreicht werden und somit eine wirtschaftliche Effizienz für einen Nutzer gesteigert werden. Zudem können vorteilhaft verbesserte Eigenschaften hinsichtlich eines Komforts für einen Nutzer erzielt werden. Insbesondere kann einem Nutzer vorteilhaft ein besonders einfaches Nachnehmen der Schneidfäden der einzelnen Module ermöglicht werden, wodurch Wartungszeiten verkürzt werden können. Insbesondere kann vorteilhaft während des Nachnehmens des Schneidfadens ei ne Verbindung der jeweiligen Module untereinander aufrechterhalten werden, wodurch das Nachnehmen des Schneidfadens vereinfacht wird. Ferner kann vor teilhaft sowohl ein Nachnehmen einzelner Schneidfäden eines einzelnen Moduls als ein Nachnehmen mehrerer Schneidfäden von mehreren Modulen gleichzeitig oder aller Schneidfäden aller Module gleichzeitig ermöglicht werden. Zudem kann eine Übertragung eines Antriebsdrehmoments von der Antriebswelle auf die jeweiligen Module optimiert und eine insbesondere gleichmäßige Kraftübertragung erreicht werden, wodurch ein Verschleiß des Schneidfadens minimiert und eine lange Betriebszeit ermöglicht werden kann.

Die Mäh- und/oder Trimmvorrichtung ist insbesondere zu einem Einsatz in der Garten- und/oder Landwirtschaft und/oder im Weinbau, zu einem Mähen und/oder Trimmen, insbesondere von schwer zugänglichen Bereichen, beispielsweise unterhalb von Rebstöcken, vorgesehen. Zu einem Antrieb kann die Antriebswelle insbesondere mit einem externen Antriebsmotor, beispielsweise einem Motor einer landwirtschaftlichen Maschine, angetrieben werden. Die Antriebswelle weist insbesondere einen drehfest und vorzugsweise fest angebundenen Anschlussflansch auf, welcher das Verbindungselement aufweist. Das Verbindungselement greift in einem montierten Zustand formschlüssig in das Gegenverbindungselement der Gehäuseeinheit ein und überträgt in einem Betriebszustand das Antriebsdrehmoment von der Antriebswelle auf die Gehäuseeinheit des ersten Moduls und treibt das erste Modul zu einer Drehbewegung um die Rotationsachse an. Jedes Modul der Mäh- und/oder Trimmvorrichtung weist insbesondere zumindest einen Schneidfaden auf. Unter "vorgesehen" soll insbesondere speziell, ausgelegt und/oder ausgestattet verstanden werden. Darunter, dass ein Objekt zu ei ner bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Gehäuseeinheit bildet insbesondere einen Aufnahmeraum zu einer Aufnahme für die Fadenspule aus. Vor teilhaft ist der Aufnahmeraum in einem montierten Zustand der Gehäuseeinheit, mit Ausnahme der zumindest einen Fadendurchlassöffnung, vollständig verschlossen.

Erfindungsgemäß weist die Gehäuseeinheit des ersten Moduls ein Formschlusselement auf, welches in einem montierten Zustand mit einem Gegenformschlusselement des zweiten Moduls zusammenwirkt und dazu vorgesehen ist, das Antriebsdrehmoment von dem ersten Modul auf das zweite Modul zu übertragen. Erfindungsgemäß weist die Gehäuseeinheit des zweiten Moduls ein weiteres Formschlusselement auf, welches dazu vorgesehen ist, mit einem weiteren Gegenformschlusselement eines weiteren Moduls zusammenzuwirken. Hierdurch kann vorteilhaft eine besonders gleichmäßige und/oder zuverlässige Übertragung des Antriebsdrehmoments gewährleistet werden. Insbesondere weisen die jeweiligen Gehäuseeinheiten eines jeden Moduls zumindest ein Formschlusselement und zumindest ein Gegenformschlusselement auf. Vorzugsweise weisen sämtliche Module der Mäh- und/oder Trimmvorrichtung entsprechende Formschlusselemente und Gegenformschlusselemente auf, sodass die Module in Reihe hintereinander anordenbar sind und das Antriebsmoment von dem ersten Modul zu einem letzten der Module über sämtliche übrigen Module übertragbar ist.

Die jeweiligen Formschlusselemente der jeweiligen Module sind insbesondere jeweils identisch zueinander ausgebildet. Die jeweiligen Gegenformschlusselemente der jeweiligen Module sind jeweils identisch zueinander ausgebildet. Die jeweiligen Formschlusselemente können insbesondere als eine Materialanhäufung der jeweiligen Gehäuseeinheit ausgebildet sein. Die Gegenformschlusselemente können insbesondere als eine Materialvertiefung in der jeweiligen Gehäuseeinheit ausgebildet sein. Insbesondere greift das Formschlusselement eines Moduls in das Gegenformschlusselement eines in einem montierten Zustand nächstliegend angeordneten Moduls formschlüssig ein und ist zu einer Übertragung des Antriebsdrehmoments von dem Modul auf das nächstliegend angeordnete Modul vorgesehen. Insbesondere sind das Formschlusselement und das Gegenformschlusselement auf gegenüberliegenden Seiten der Gehäuseeinheit eines jeden Moduls angeordnet und bezüglich der Rotationsachse zueinander winkelversetzt, vorzugsweise um einen Winkel von 180 "versetzt, angeordnet, sodass bei einer Montage ein Formschluss zwischen einem Formschlusselement eines Moduls mit einem Gegenformschlusselement eines nächstliegend angeordneten Moduls mittels einer Drehbewegung erzeugt werden kann. Es ist insbesondere denkbar, dass jedes Modul mehrere Formschlusselemente und mehrere Gegenformschlusselemente aufweist, welche jeweils symmetrisch und in einer Ebene winkelversetzt zueinander angeordnet sind. Beispielsweise könnten die Module jeweils zwei um einen Winkel von 180° zueinander versetzte Formschlusselemente oder drei jeweils um einen Winkel von 120° zueinander versetzte Formschlusselemente oder vier um einen Winkel von 90° zueinander versetzte Formschlusselemente aufweisen. Insbesondere kann eine Anzahl von Formschlusselementen und Gegenformschlusselementen auf bestimmte Betriebsbedingungen angepasst sein. Durch ei ne symmetrische Anordnung der Formschlusselemente und Gegenformschlusselemente kann vorteilhaft eine in einem Betriebszustand der Mäh- und/oder Trimmvorrichtung auftretende Sogwirkung durch die Rotation der jeweiligen Schneidfäden ausgeglichen werden.

Ferner wird vorgeschlagen, dass die Gehäuseeinheiten jeweils ein ringartiges Gehäuseelement und zumindest ein Abdeckelement aufweisen, welches in einem montierten Zustand mit dem jeweiligen Gehäuseelement zumindest teilweise einen geschlossenen Innenraum zu einer Aufnahme der jeweiligen Fadenspule ausbildet. Vorzugsweise sind die jeweiligen Formschlusselemente und die jeweiligen Gegenformschlusselemente der jeweiligen Gehäuseeinheit and dem ringartigen Gehäuseelement, bevorzugt an einem inneren Rand der Gehäuseelemente, welcher in einem montierten Zustand der Antriebswelle zugewandt ist. Hierdurch kann vorteilhaft ein Schutz des Fadenspule und/oder des auf der Fadenspule aufgewickelten Teils des Schneidfadens vor äußeren Einflüssen, beispielsweise vor Feuchtigkeit, ermöglicht werden. Unter "ringartig" soll insbesondere verstanden werden, dass ein Querschnitt der jeweiligen Gehäuseelemente bezüglich ihrer jeweiligen Axialrichtung von einer Form eines Kreisrings insbesondere weniger als 25 %, vorzugsweise weniger als 10 % und besonders bevorzugt weniger als 5 % abweicht. Unter einer "Axialrichtung" soll insbesondere eine in einem montierten Zustand parallel zu der Rotationsachse verlaufende Richtung verstanden werden.

Außerdem wird vorgeschlagen, dass das Abdeckelement mit der jeweiligen Fadenspule insbesondere desselben Moduls verbunden ist. Das Abdeckelement ist vorzugsweise über eine form- und oder kraftschlüssige Verbindung, beispielsweise über eine Schraubverbindung, mit der Fadenspule verbunden. Es wäre jedoch auch denkbar, dass das Abdeckelement einstückig mit der Fadenspule ausgebildet oder über eine stoffschlüssige Verbindung mit der Fadenspule verbunden, beispielsweise verschweißt oder verklebt, ist. Hierdurch kann vorteilhaft eine einfache Montage und/oder Demontage der jeweiligen Module, insbesondere zu einem Austausch der jeweiligen Schneidfäden, ermöglicht werden.

Zudem wird vorgeschlagen, dass die Gehäuseeinheiten jeweils ein weiteres Abdeckelement aufweisen, welches dem jeweiligen Abdeckelement insbesondere desselben Moduls gegenüberliegend angeordnet ist. Hierdurch kann vorteilhaft ein Innenraum zumindest im Wesentlichen vollständig verschlossen werden, wodurch insbesondere ein Schutz der Fadenspule und das darauf aufgewickelten Teils des Schneidfadens vor äußeren Einflüssen weiter verbessert werden kann. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht.

Wenn das weitere Abdeckelement relativ zum Abdeckelement insbesondere des selben Moduls drehbar angeordnet ist, kann vorteilhaft eine Montage- und/oder Demontage sowie ein Nachnehmen des Schneidfadens vereinfacht werden. Ins besondere kann das Gehäuseelement ein Führungselement, beispielsweise eine ringförmige Nut, aufweisen, in welches das Abdeckelement eingreifen und somit drehbar gelagert sein kann. Insbesondere ist das Abdeckelement fest mit dem Führungselement verbunden, vorzugsweise mit diesem verschraubt.

Ferner wird vorgeschlagen, dass die Fadendurchlassöffnungen jeweils eine Verlaufsrichtung aufweisen, welche unter einem Winkel kleiner als 90° zu einer radialen Außenwandung der jeweiligen Gehäuseeinheit, insbesondere der Gehäuseelemente insbesondere desselben Moduls, ausgerichtet ist. Vorteilhaft weisen die Fadendurchlassöffnungen jeweils eine Verlaufsrichtung auf, welche unter einem Winkel kleiner als 75°, besonders vorteilhaft unter einem Winkel kleiner als 60°, vorzugsweise unter einem Winkel kleiner als 55° und besonders bevorzugt unter einem Winkel kleiner als 50°, zu einer radialen Außenwandung der jeweiligen Gehäuseeinheit ausgerichtet ist. Hierdurch kann vorteilhaft eine Beschädigung des Schneidfadens verhindert werden. Ferner kann ein Verschleiß des Schneidfadens an der Fadendurchlassöffnung vorteilhaft verringert werden, wodurch vorteilhaft eine Nutzungsdauer eines Schneidfadens verlängert und eine Nutzerzufriedenheit verbessert werden kann.

Außerdem wird vorgeschlagen, dass die Gehäuseeinheiten, insbesondere die Gehäuseelemente, jeweils eine in Umfangsrichtung verlaufende, an die Fadendurchlassöffnung anschließende und insbesondere zulaufende Fadenführungskerbe aufweisen. Die Fadenführungskerbe erstreckt sich insbesondere von der Fadendurchlassöffnung ausgehend in Umfangsrichtung der Gehäuseeinheit und läuft insbesondere entgegen einer Standard-Drehrichtung der Antriebswelle zu, insbesondere derart, dass eine Tiefe und/oder Breite der Fadenführungskerbe vor zugsweise monoton abnimmt, sodass der Schneidfaden bei einer Beendigung der Rotationsbewegung der Antriebswelle in der Fadenführungskerbe zum Liegen kommt. Hierdurch kann ein Schutz des Schneidfadens vor Beschädigungen weiter verbessert werden. Insbesondere kann ein Verschleiß des Schneidfadens vorteilhaft weiter verringert werden.

Ferner wird vorgeschlagen, dass die Module, und zwar insbesondere sämtliche Module der Mäh- und/oder Trimmvorrichtung, jeweils genau eine Fadendurchlassöffnung aufweisen. Hierdurch kann vorteilhaft jeder einzelne Schneidfaden separat nachgestellt werden. Insbesondere kann ein durch unterschiedliche Beanspruchung verursachter unterschiedlicher Verschleiß einzelner Schneidfäden besser berücksichtigt werden.

Zudem wird vorgeschlagen, dass die Fadendurchlassöffnungen benachbarter Mo dule bezüglich der Rotationsachse zueinander winkelversetzt angeordnet sind, insbesondere um einen Winkel von 180°. Um eine winkelversetzte Anordnung der Fadendurchlassöffnungen benachbarten Module zu erreichen, sind insbesondere die Formschlusselemente und Gegenformschlusselement sowie insbesondere die Fadendurchlassöffnungen der benachbarten Module aufeinander abgestimmt. Durch diese symmetrische Anordnung kann vorteilhaft eine besonders gleichmäßige Drehbewegung der Antriebswelle in einem Betrieb der Mäh- und/oder Trimmvorrichtung ermöglicht werden.

Die Mäh- und/oder Trimmvorrichtung weist erfindungsgemäß eine Arretierungseinheit auf, welche dazu vorgesehen ist, eine Drehbarkeit der Fadenspulen relativ zur Antriebswelle in einem Arretierzustand zumindest im Wesentlichen zu verhindern. Die Arretierungseinheit weist insbesondere zumindest ein Arretierungselement auf, welches die jeweiligen Fadenspulen der jeweiligen Module fest mit der Antriebswelle verspannt. Das Arretierungselement kann beispielsweise als ein Spannschraube ausgebildet sein, welche in eine entsprechen des Gewinde der Antriebswelle verschraubt wird, wobei das Gewinde als ein Linksgewinde ausgebildet ist, um ein lösen der Spannschraube bei einem Drehen der Antriebswelle in einem Betrieb zu verhindern. Das Arretierungselement drückt in dem Arretierzustand die jeweiligen Fadenspulen in Axialrichtung relativ zueinander zusammen und verhindert so eine Drehbarkeit der Fadenspulen relativ zur Antriebswelle. Hierdurch kann insbesondere ein unerwünschtes Abwickeln des Schneidfadens, insbesondere während eines Betriebs der Mäh- und/oder Trimmvorrichtung, verhindert werden. Unter "zumindest im Wesentlichen zu verhindern" soll in diesem Zusammenhang insbesondere verstanden werden, dass eine Drehbarkeit der Fadenspule relativ zu der Antriebswelle in dem Arretierzustand nur unter einer sehr starken äußeren Krafteinwirkung, welche in einem normalen Betriebszustand nicht auftritt, möglich wäre.

Die Fadenspulen sind jeweils zu einem Nach nehmen der Schneidfäden in einem Freigabezustand der Arretierungseinheit relativ zur Antriebswelle innerhalb der jeweiligen Gehäuseeinheit insbesondere desselben Moduls drehbar. Hierdurch kann vorteilhaft ein Nachnehmen des Schneidfadens vereinfacht werden. Insbesondere können einzelne Schneidfäden der jeweiligen Module oder alle Schneidfäden aller Module vorteilhaft besonders einfach nachgenommen werden. Weiter vorteilhaft können während eines Nachnehmens die formschlüssigen Verbindungen der jeweiligen Module untereinander aufrechterhalten bleiben, wodurch insbesondere ein ungewolltes Lösen und Abfallen einzelner Module verhindert und ein Arbeitsaufwand eines Nutzers beim Nachnehmen vorteilhaft reduziert werden kann.

Ferner wird vorgeschlagen, dass die Gehäuseeinheiten jeweils zumindest eine Fadenaufnahme aufweisen, welche bei aufgenommenem Schneidaden dazu vor gesehen sind, eine insbesondere parallel zur jeweiligen Axialrichtung wirkende Verbindung mit der jeweiligen Fadenspule bereitzustellen. Die Fadenaufnahme ist insbesondere an dem weiteren Abdeckelement der Gehäuseeinheit, insbesondere an einem inneren Rand des weiteren Abdeckelements, in welchen die Fadenspule eingesteckt wird, angeordnet. Insbesondere verklemmt der Schneidfaden die Fadenspule nach einem Aufstecken und erzeugt somit die parallel zur jeweiligen Axialrichtung wirkende Verbindung. Hierdurch kann vorteilhaft die Fadenspule mit einfachen technischen Mitteln mit der Gehäuseeinheit verbunden werden ein ungewolltes Lösen der Fadenspule verhindert werden.

Die Mäh und/oder Trimmvorrichtung weist vorzugsweise zumindest ein Wickeladapterelement auf, welches mit den jeweiligen Fadenspulen der jeweiligen Module lösbar verbunden werden kann und insbesondere zu einem vereinfachten Aufwickeln des Schneidfadens in Zusammenwirken mit einer externen Drehvorrichtung, beispielsweise einem Akkuschrauber, vorgesehen ist. Mit Hilfe des Wickeladapterelements kann insbesondere die parallel zur jeweilen Axialrichtung wirkende Verbindung mit der jeweiligen Fadenspule, insbesondere durch ein leichtes Drücken, aufgehoben werden.

Darüber hinaus wird vorgeschlagen, dass die Module, und zwar insbesondere sämtliche Module, zueinander identisch ausgebildet sind. Hierdurch kann vorteilhaft ein Herstellungsprozess vereinfacht werden. Ferner kann vorteilhaft ein Kom fort für einen Nutzer erhöht werden, indem einzelne Module frei untereinander austauschbar sind.

Die erfindungsgemäße Mäh- und/oder Trimmvorrichtung soll hierbei nicht auf die oben beschriebene Anwendung und Ausführungsform beschränkt sein. Insbesondere kann die erfindungsgemäße Mäh- und/oder Trimmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1:: ein erstes Modul einer Mäh- und/oder Trimmvorrichtung mit einer Gehäuseeinheit in einer schematischen Draufsicht,
- Fig. 2:: das erste Modul in einer weiteren schematischen Draufsicht,
- Fig. 3:: die Gehäuseeinheit des ersten Moduls in einer schematischen Ansicht,
- Fig. 4:: eine schematische Schnittdarstellung eines Teilbereichs der Gehäuseeinheit,
- Fig. 5:: eine Antriebswelle der Mäh- und/oder Trimmvorrichtung,
- Fig. 6:: das erste Modul in einer formschlüssigen Verbindung mit der Antriebswelle,
- Fig. 7:: die Gehäuseeinheit mit einer Fadenspule und einem Wickeladapter,
- Fig. 8:: die Mäh- und/oder Trimmvorrichtung mit einer Arretierungseinheit und
- Fig. 9:: die Mäh- und/oder Trimmvorrichtung in einer schematischen Explosionsdarstellung.

### Beschreibung des Ausführungsbeispiels

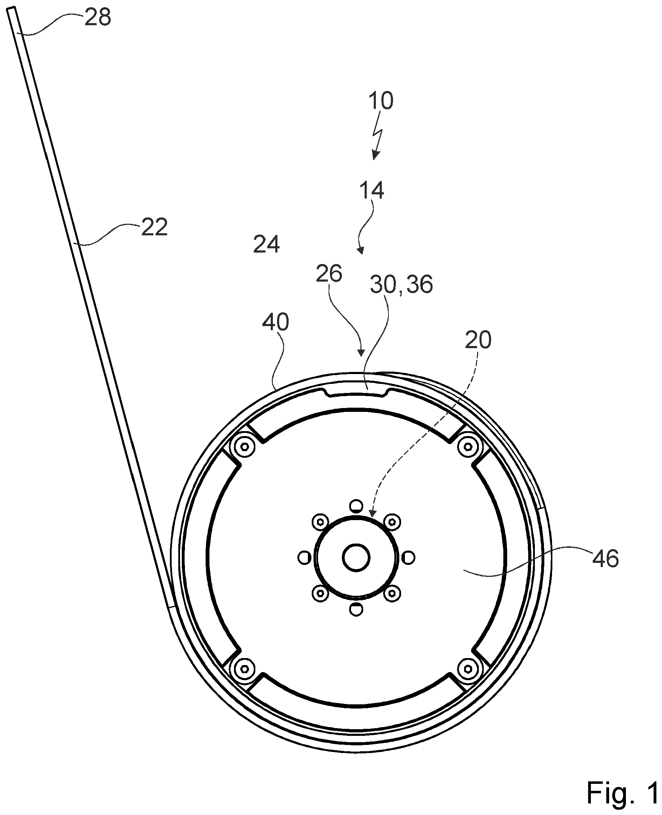

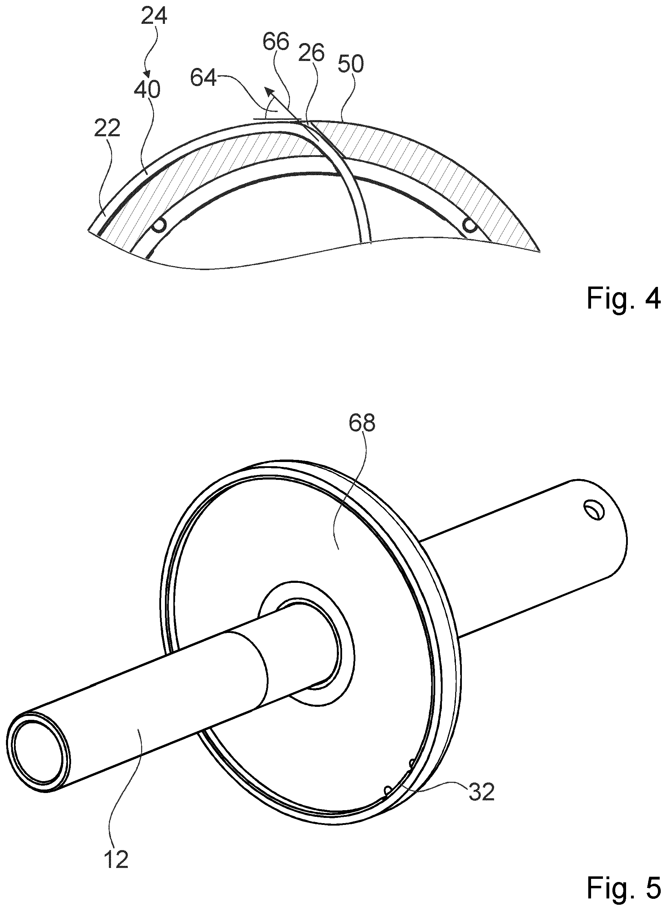

Fig. 1 zeigt ein erstes Modul 14 einer Mäh- und/oder Trimmvorrichtung 10 in einer schematischen Draufsicht. Das erste Modul 14 weist eine Fadenspule 20 zu einer Aufnahme und Bevorratung eines Schneidfadens 22 auf. Das erste Modul 14 weist eine Gehäuseeinheit 24 auf. Die Gehäuseeinheit 24 weist ein ringartiges Gehäuseelement 40 auf. Die Gehäuseeinheit 24 weist eine Fadendurchlassöffnung 26 auf. Die Fadendurchlassöffnung 26 ist als eine Bohrung in dem Gehäuseelement 40 der Gehäuseeinheit 24 ausgeführt. Die Fadendurchlassöffnung 26 ist zu einem Durchlass eines losen Endes 28 des Schneidfadens 22 vorgesehen Das erste Modul 14 weist ein Formschlusselement 34 auf. Die Gehäuseeinheit 24 des ersten Moduls 14 weist ein Gegenverbindungselement 30 auf. Das Gegenverbindungselement 30 ist zu einer formschlüssigen Verbindung mit einem Verbindungselement 32 einer Antriebswelle 12 der Mäh- und/oder Trimmvorrichtung 10 vorgesehen (vgl. Fig. 5).

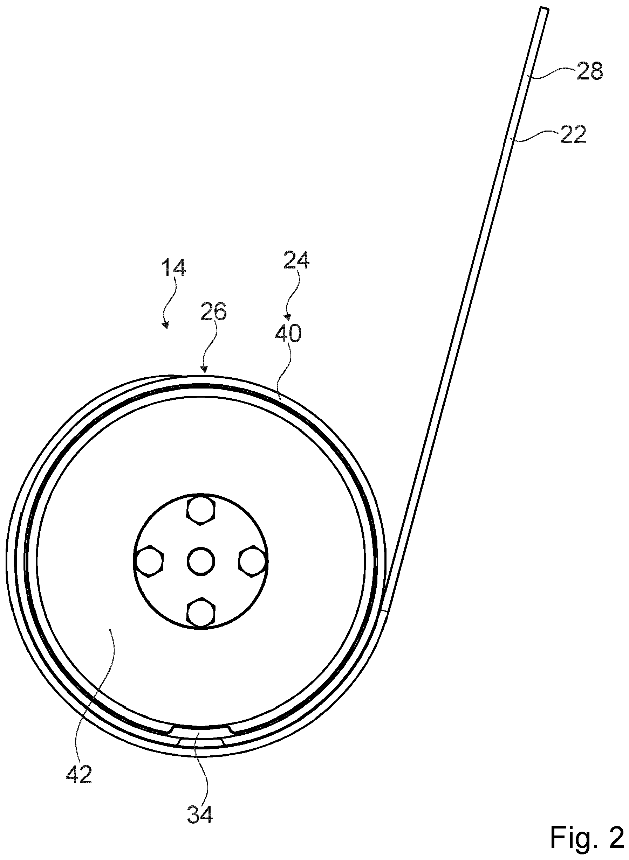

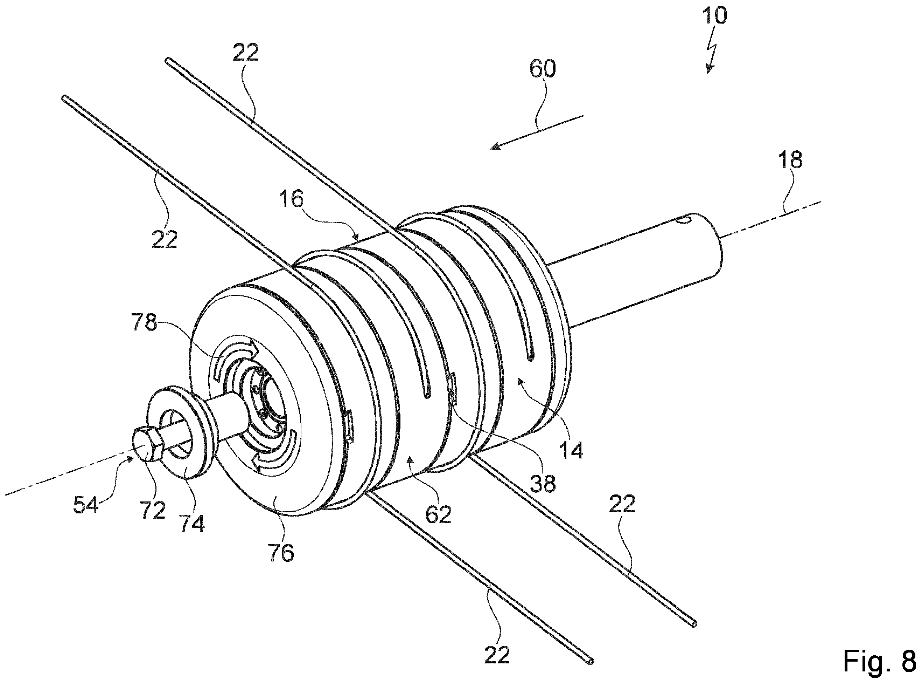

Fig 2 zeigt das erste Modul 14 in einer weiteren schematischen Draufsicht aus ei ner im Vergleich zu Fig. 1 entgegengesetzten Blickrichtung. Die Gehäuseeinheit 24 weist das Formschlusselement 34 auf. In einem montierten Zustand der Mäh- und/oder Trimmvorrichtung 10 wirkt das Formschlusselement 34 mit einem Gegenformschlusselement 36 eines zweiten Moduls 16 (vgl. Fig. 8) zusammen. Das zweite Modul 16 ist identisch zu dem ersten Modul 14 ausgebildet, weshalb zu ei ner Darstellung des Gegenformschlusselements 36 an dieser Stelle auf Fig. 1 verwiesen sei.

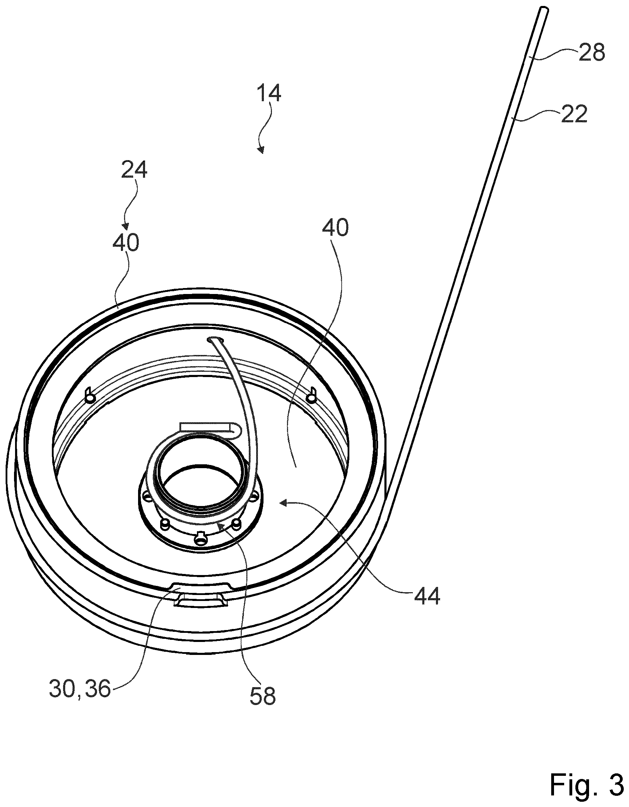

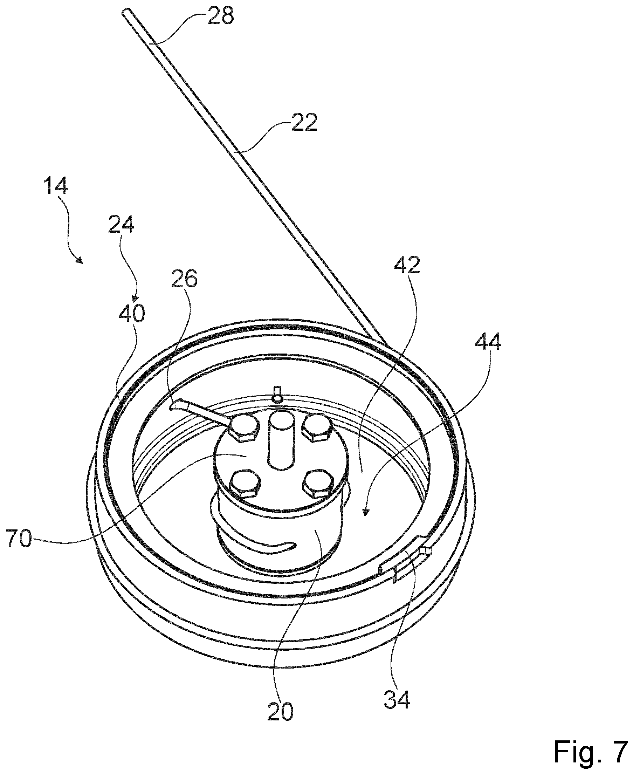

Fig. 3 zeigt die Gehäuseeinheit 24 des ersten Moduls 14 in einer schematischen Ansicht. Die Gehäuseeinheit 24 weist ein Abdeckelement 42 auf. Das Abdeckelement 42 bildet in einem montierten Zustand mit dem Gehäuseelement 40 der Gehäuseeinheit 24 einen zumindest teilweise geschlossenen Innenraum 44 aus. Der Innenraum 44 ist zu einer Aufnahme der Fadenspule 20 vorgesehen (vgl. Fig. 7). Das Abdeckelement 42 ist mit der Fadenspule 20 verbunden.

Die Gehäuseeinheit weist ein weiteres Abdeckelement 46 auf. Das weitere Abdeckelement 46 ist dem Abdeckelement 42 gegenüberliegend angeordnet (vgl. Fig. 1 und 2). Das weitere Abdeckelement 46 ist relativ zu dem Abdeckelement 42 dreh bar angeordnet.

Die Gehäuseeinheit 24 weist eine Fadenaufnahme 58 auf. Die Fadenaufnahme 58 ist dazu vorgesehen, den Schneidfaden 22 aufzunehmen. Bei aufgenommenem Schneidfaden 22 ist die Fadenaufnahme 58 dazu vorgesehen, eine parallel zu einer Axialrichtung 60 (vgl. Fig 8) wirkende Verbindung mit der jeweiligen Fadenspule 20 bereitzustellen.

Fig. 4 zeigt eine schematische Schnittdarstellung eines Teilbereichs des Gehäuseelements 40 der Gehäuseeinheit 24. Der Schnitt verläuft durch das Gehäuseelement 40 orthogonal zu einer Axialrichtung 60 (vgl. Fig. 8) und schneidet die Fadendurchlassöffnung 26. Die Fadendurchlassöffnung 26 weist eine Verlaufsrichtung 66 auf, welche unter einem Winkel 64 zu einer radialen Außenwandung 50 des Gehäuseelements 40 der Gehäuseeinheit 24 angeordnet ist. Der Winkel 64 ist kleiner als 90° und beträgt insbesondere 45°.

Fig. 5 zeigt die Antriebswelle 12 der Mäh- und/oder Trimmvorrichtung 10. Die Antriebswelle 12 weist einen Anschlussflansch 68 auf. Der Anschlussflansch 68 ist mit der Antriebswelle 12 verschweißt. Der Anschlussflansch 68 weist das Verbindungselement 32 auf.

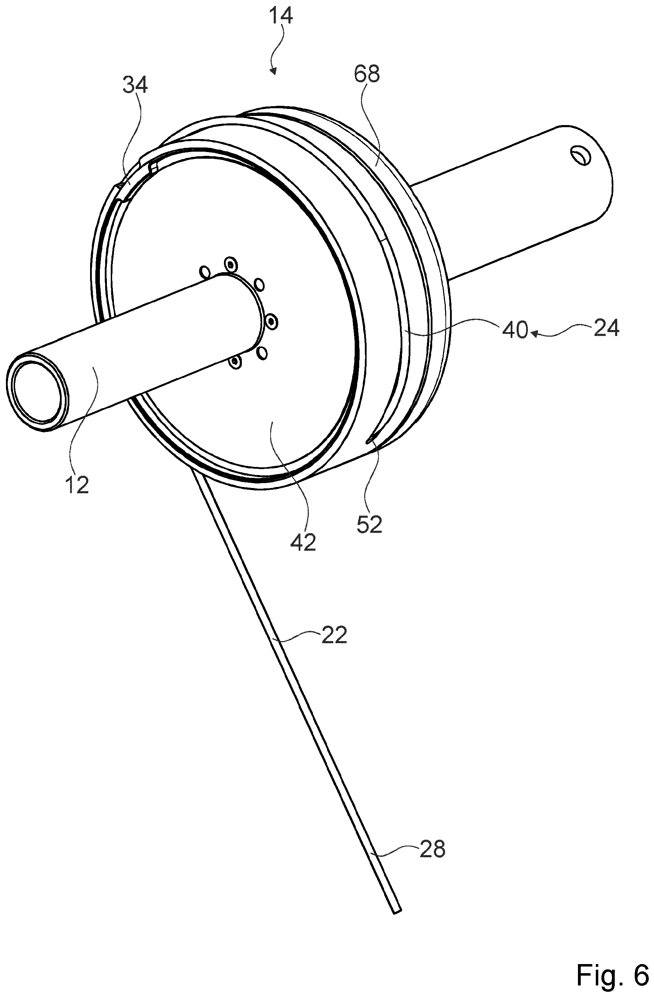

Fig. 6 zeigt eine Darstellung der Gehäuseeinheit 24 des ersten Moduls 14, welche über das Gegenverbindungselement 30 formschlüssig mit dem Verbindungselement 32 verbunden ist. Das Gehäuseelement 40 der Gehäuseeinheit 24 weist ei ne an die Fadendurchlassöffnung 26 anschließende Fadenführungskerbe 52 auf. Die Fadenführungskerbe 52 läuft in Umfangsrichtung des Gehäuseelements 40 zu und nimmt den Schneidfaden 22 auf.

Fig 7. zeigt die Gehäuseeinheit 24 des ersten Moduls 14 mit der Fadenspule 20 und einem Wickeladapterelement 70. Das Wickeladapterelement 70 ist dazu vor gesehen, den Schneidfaden 22 um die Fadenspule 20 zu wickeln.

Fig. 8 zeigt die Mäh- und/oder Trimmvorrichtung 10 in einem vormontierten Zu stand. Die Mäh- und/oder Trimmvorrichtung 10 weist das erste Modul 14, das zweite Modul 16 und zwei weitere Module 62 auf. Das erste Modul 14, das zweite Modul 16 und die weiteren Module 62 sind zueinander identisch ausgebildet. Das erste Modul 14 ist über das Gegenverbindungselement 30 formschlüssig mit dem Verbindungselement 32 der Antriebswelle 12 verbunden. Über das Formschlusselement 34 überträgt die Gehäuseeinheit 24 des ersten Moduls 14 in einem Betriebszustand ein Antriebsdrehmoment (nicht dargestellt) von der Antriebswelle 12 auf das Gegenformschlusselement 36 des zweiten Moduls 16. Das zweite Modul 16 weist ein weiteres Formschlusselement 38 auf, welches identisch zu dem Formschlusselement 34 des ersten Moduls 14 ausgebildet ist. Das weitere Modul 62 weist ein weiteres Gegenformschlusselement 48 auf, sodass das Antriebsdrehmoment auf gleiche Art und Weise von dem weiteren Formschlusselement 34 des zweiten Moduls 16 auf das nächstliegende weitere Modul 62 formschlüssig übertragen wird. Das Antriebsdrehmoment erzeugt in einem Betriebszustand eine Drehbewegung der Mäh- und/oder Trimmvorrichtung 10 um eine Rotationsachse 18 in einer Drehrichtung 78.

Das erste Modul 14, das zweite Modul 16 und die weiteren Module 62 weisen jeweils genau eine Fadendurchlassöffnung 26 auf. Die Fadendurchlassöffnungen 26 benachbarter Module 14, 16, 62 sind bezüglich der Rotationsachse 18 zueinander winkelversetzt angeordnet. Die Fadendurchlassöffnung 26 des ersten Moduls 14 ist um einen Winkel von 180° bezüglich der Rotationsachse 18 versetzt zu der Fadendurchlassöffnung 26 des zweiten Moduls 16 angeordnet.

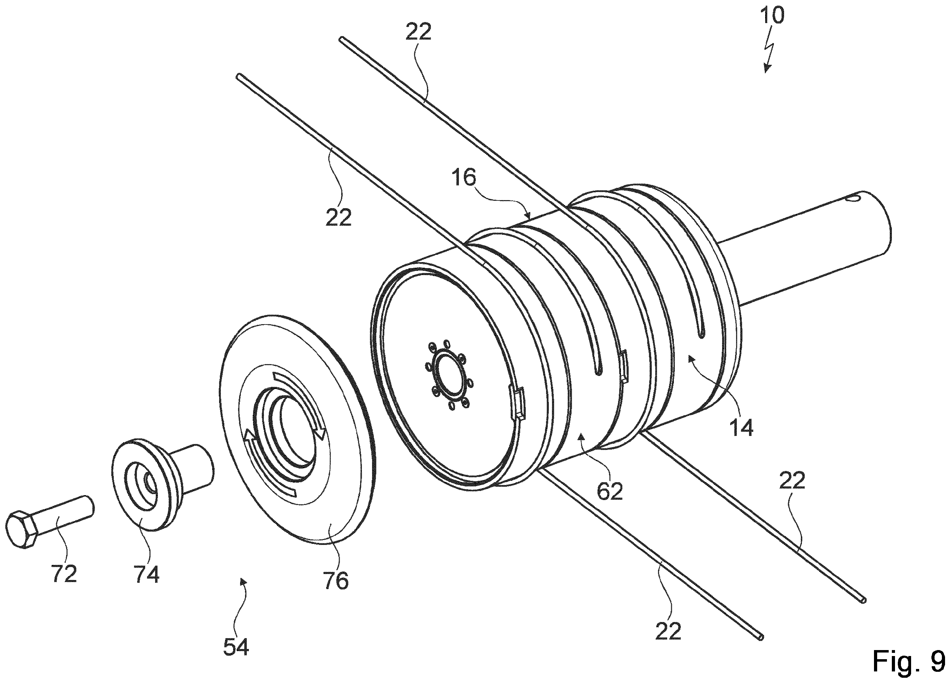

Die Mäh- und/oder Trimmvorrichtung 10 weist eine Arretierungseinheit 54 auf, welche in Fig. 8 und 9 dargestellt ist. Die Arretierungseinheit 54 ist dazu vorgesehen, in einem Arretierzustand eine Drehbarkeit der Fadenspulen 20 relativ zu der Antriebswelle 12 zumindest im Wesentlichen zu verhindern. In einem Freigabezustand der Arretierungseinheit 54 sind die Fadenspulen 20 des ersten Moduls 14, des zweiten Moduls 16 und der weiteren Module 62 relativ zu der Antriebswelle 12 drehbar. Die Arretierungseinheit 54 weist ein Arretierungselement 72 und ein weiteres Arretierungselement 74 auf. Das Arretierungselement 72 und das weitere Arretierungselement 74 sind jeweils als Schrauben mit einem Linksgewinde (nicht dargestellt) ausgebildet. Zu einer Herstellung des Arretierungszustands wird das weitere Arretierungselement 74 in ein Innengewinde (nicht dargestellt) der Antriebswelle 12 entgegen der Drehrichtung 78 eingeschraubt und drückt einen End flansch 76 gegen des letzte der weiteren Module 62. Das Arretierungselement 72 wird in das weitere Arretierungselement 74 entgegen der Drehrichtung 78 eingeschraubt, um den Arretierzustand herzustellen.

### Bezugszeichen

- 10: Mäh- und/oder Trimmvorrichtung
- 12: Antriebswelle
- 14: erstes Modul
- 16: zweites Modul
- 18: Rotationsachse
- 20: Fadenspule
- 22: Schneidfaden
- 24: Gehäuseeinheit
- 26: Fadendurchlassöffnung
- 28: loses Ende
- 30: Gegenverbindungselement
- 32: Verbindungselement
- 34: Formschlusselement
- 36: Gegenformschlusselement
- 38: weiteres Formschlusselement
- 40: Gehäuseelement
- 42: Abdeckelement
- 44: Innenraum
- 46: weiteres Abdeckelement
- 46: weiteres Gegenformschlusselement
- 50: Außenwandung
- 52: Fadenführungskerbe
- 54: Arretierungseinheit
- 56: Fadenaufnahme
- 60: Axialrichtung
- 62: weiteres Modul
- 64: Winkel
- 66: Verlaufsrichtung
- 68: Anschlussflansch
- 70: Wickeladapterelement
- 72: Arretierungselement
- 74: weiteres Arretierungselement
- 76: Endflansch
- 78: Drehrichtung

## Patentansprüche

1. Mäh- und/oder Trimmvorrichtung (10) mit einer Antriebswelle (12), mit einem ersten Modul (14) und mit zumindest einem zweiten Modul (16), welche über die Antriebswelle (12) um eine Rotationsachse (18) rotierend antreibbar sind und welche jeweils eine Fadenspule (20) zu einer Aufnahme und Bevorratung zumindest eines Schneidfadens (22) und eine Gehäuseeinheit (24) mit zumindest einer Fadendurchlassöffnung (26) zu einem Durchlass eines losen Endes (28) des Schneidfadens (22) umfassen, wobei die Gehäuseeinheit (24) des ersten Moduls (14) zumindest ein Gegenverbindungselement (30) aufweist, welches zu einer formschlüssigen Verbindung mit einem Verbindungselement (32) der Antriebswelle (12) und zu einem Empfang eines Antriebsdrehmoments von der Antriebswelle (12) vorgesehen ist, wobei die Gehäuseeinheit (24) des ersten Moduls (14) ein Formschlusselement (34) aufweist, welches in einem montierten Zustand mit einem Gegenformschlusselement (36) des zweiten Moduls (16) zusammenwirkt und dazu vorgesehen ist, das Antriebsdrehmoment von dem ersten Modul (14) auf das zweite Modul (16) zu übertragen, wobei die Gehäuseeinheit (24) des zweiten Moduls (16) ein weiteres Formschlusselement (38) aufweist, welches dazu vorgesehen ist, mit einem weiteren Gegenformschlusselement (48) eines weiteren Moduls (62) zusammenzuwirken, **dadurch gekennzeichnet, dass** die Mäh- und/oder Trimmvorrichtung (10) eine Arretierungseinheit (54) aufweist, welche dazu vorgesehen ist, eine Drehbarkeit der Fadenspulen (20) relativ zur Antriebswelle (12) in einem Arretierzustand zumindest im Wesentlichen zu verhindern, wobei die Fadenspulen (20) in einem Freigabezustand der Arretierungseinheit (54) **in**nerhalb der jeweiligen Gehäuseeinheit (24) jeweils zu einem Nachnehmen der Schneidfäden (22) relativ zur Antriebswelle (12) drehbar sind.

2. Mäh- und/oder Trimmvorrichtung (10) nach Anspruch 1, **dadurch gekennzeichnet, dass** die Gehäuseeinheiten (24) jeweils ein ringartiges Gehäuseelement (40) und zumindest ein Abdeckelement (42) aufweisen, welches in einem montierten Zustand mit dem jeweiligen Gehäuseelement (40) zumindest teilweise einen geschlossenen Innenraum (44) zu einer Aufnahme der jeweiligen Fadenspule (20) ausbildet.

3. Mäh- und/oder Trimmvorrichtung (10) nach Anspruch 2, **dadurch gekennzeichnet, dass** das Abdeckelement (42) mit der jeweiligen Faden- spule (20) verbunden ist.

4. Mäh- und/oder Trimmvorrichtung (10) nach Anspruch 3, **dadurch gekennzeichnet, dass** die Gehäuseeinheiten (24) jeweils ein weiteres Abdeckelement (46) aufweisen, welches dem jeweiligen Abdeckelement (42) gegenüberliegend angeordnet ist.

5. Mäh- und/oder Trimmvorrichtung (10) nach Anspruch 4, **dadurch gekennzeichnet, dass** das weitere Abdeckelement (46) relativ zum jeweiligen Abdeckelement (42) drehbar angeordnet ist.

6. Mäh- und/oder Trimmvorrichtung (10) nach einem der vorhergehenden Ansprüche, **dadurch gekennzeichnet, dass** die Fadendurchlassöffnungen (26) jeweils eine Verlaufsrichtung (66) aufweisen, welche unter einem Winkel (64) kleiner als 90° zu einer radialen Außenwandung (50) der jeweiligen Gehäuseeinheit (24), insbesondere der Gehäuseelemente (40), ausgerichtet ist

7. Mäh- und/oder Trimmvorrichtung (10) nach einem der vorhergehenden Ansprüche, **dadurch gekennzeichnet, dass** die Gehäuseeinheiten (24), insbesondere die Gehäuseelemente (40), jeweils eine in Umfangsrichtung verlaufende, an die Fadendurchlassöffnung (26) anschließende und ins besondere zulaufende Fadenführungskerbe (52) aufweisen.

8. Mäh- und/oder Trimmvorrichtung (10) nach einem der vorhergehenden Ansprüche, **dadurch gekennzeichnet, dass** die Module (14, 16. 62) jeweils genau eine Fadendurchlassöffnung (26) aufweisen.

9. Mäh- und/oder Trimmvorrichtung (10) nach einem der vorhergehenden Ansprüche, **dadurch gekennzeichnet, dass** die Fadendurchlassöffnungen (26) benachbarter Module (14, 16, 62) bezüglich der Rotationsachse (18) zueinander winkelversetzt angeordnet sind, insbesondere um einen Winkel von 180°.

10. Mäh- und/oder Trimmvorrichtung (10) nach einem der vorherigen Ansprüche, **dadurch gekennzeichnet, dass** die Gehäuseeinheiten (24) jeweils zumindest eine Fadenaufnahme (58) aufweisen, welche bei aufgenommenem Schneidfaden (22) dazu vorgesehen sind, eine insbesondere parallel zu einer jeweiligen Axialrichtung (60) wirkende Verbindung mit der jeweiligen Fadenspule (20) bereitzustellen.

11. Mäh- und/oder Trimmvorrichtung (10) nach einem der vorherigen Ansprüche, **dadurch gekennzeichnet, dass** sämtliche Module (14, 16, 62) zueinander identisch ausgebildet sind.

## Claims

1. Mowing and/or trimming device (10) comprising a drive shaft (12), a first module (14), and at least one second module (16), which are rotatably drivable about a rotational axis (18) via the drive shaft (12), and which each comprise a filament spool (20) for receiving and storing at least one cutting filament (22), and a housing unit (24) with at least one filament outlet opening (26) for the passage of a free end (28) of the cutting filament (22),
wherein the housing unit (24) of the first module (14) comprises at least one counter-connection element (30), which is designed to form a positive-fit connection with a connection element (32) of the drive shaft (12) and to receive a drive torque from the drive shaft (12),
wherein the housing unit (24) of the first module (14) comprises a positive-fit element (34) which, in an assembled state, interacts with a counter-positive-fit element (36) of the second module (16) and is configured to transmit the drive torque from the first module (14) to the second module (16),
wherein the housing unit (24) of the second module (16) comprises a further positive-fit element (38), which is configured to interact with a further counter-positive-fit element (48) of a further module (62),
**characterized in that**
the mowing and/or trimming device (10) comprises a locking unit (54), which is configured to at least substantially prevent rotation of the filament spools (20) relative to the drive shaft (12) in a locking state,
wherein the filament spools (20) are rotatable within the respective housing unit (24) relative to the drive shaft (12) in a release state of the locking unit (54) in order to dispense the cutting filaments (22).

2. Mowing and/or trimming device (10) according to claim 1, **characterized in that** the housing units (24) each comprise an annular housing element (40) and at least one cover element (42), which, in an assembled state, together with the respective housing element (40), at least partially form a closed interior space (44) for receiving the respective filament spool (20).

3. Mowing and/or trimming device (10) according to claim 2, **characterized in that** the cover element (42) is connected to the respective filament spool (20).

4. Mowing and/or trimming device (10) according to claim 3, **characterized in that** the housing units (24) each comprise a further cover element (46), which is arranged opposite the respective cover element (42).

5. Mowing and/or trimming device (10) according to claim 4, **characterized in that** the further cover element (46) is arranged rotatably relative to the respective cover element (42).

6. Mowing and/or trimming device (10) according to any one of the preceding claims, **characterized in that** the filament outlet openings (26) each have a direction of extension (66) which is oriented at an angle (64) of less than 90° to a radial outer wall (50) of the respective housing unit (24), in particular of the housing elements (40).

7. Mowing and/or trimming device (10) according to any one of the preceding claims, **characterized in that** the housing units (24), in particular the housing elements (40), each comprise a filament guide notch (52) which extends in the circumferential direction, adjoins the filament outlet opening (26), and in particular tapers.

8. Mowing and/or trimming device (10) according to any one of the preceding claims, **characterized in that** the modules (14, 16, 62) each comprise exactly one filament outlet opening (26).

9. Mowing and/or trimming device (10) according to any one of the preceding claims, **characterized in that** the filament outlet openings (26) of adjacent modules (14, 16, 62) are arranged offset in angle relative to each other about the rotational axis (18), in particular by an angle of 180°

10. Mowing and/or trimming device (10) according to any one of the preceding claims, **characterized in that** the housing units (24) each comprise at least one filament holder (58), which, when a cutting filament (22) is received, is configured to provide a connection to the respective filament spool (20), in particular acting parallel to a respective axial direction (60).

11. Mowing and/or trimming device (10) according to any one of the preceding claims, **characterized in that** all modules (14, 16, 62) are formed identically to each other.

## Revendications

1. Dispositif de coupe et/ou d'élagage (10) avec un arbre d'entraînement (12), avec un premier module (14) et avec au moins un deuxième module (16), qui peuvent être entraînés en rotation autour d'un axe de rotation (18) par l'intermédiaire de l'arbre d'entraînement (12) et qui comprennent chacun une bobine de fil (20) pour recevoir et stocker au moins un fil de coupe (22) et une unité de boîtier (24) avec au moins une ouverture de passage de fil (26) pour un passage d'une extrémité libre (28) du fil de coupe (22), l'unité de boîtier (24) du premier module (14) présentant au moins un élément de liaison antagoniste (30) qui est prévu pour une liaison par complémentarité de forme avec un élément de liaison (32) de l'arbre d'entraînement (12) et pour recevoir un couple d'entraînement de l'arbre d'entraînement (12), l'unité de boîtier (24) du premier module (14) présentant un élément de complémentarité de forme (34), qui, dans un état monté, coopère avec un élément de complémentarité de forme antagoniste (36) du deuxième module (16) et est prévu pour transmettre le couple d'entraînement du premier module (14) au deuxième module (16), l'unité de boîtier (24) du deuxième module (16) présentant un autre élément de complémentarité de forme (38) qui est prévu pour coopérer avec un autre élément de complémentarité de forme antagoniste (48) d'un autre module (62), **caractérisé en ce que** le dispositif de coupe et/ou d'élagage (10) présente une unité de blocage (54) qui est prévue pour empêcher au moins essentiellement une possibilité de rotation des bobines de fil (20) par rapport à l'arbre d'entraînement (12) dans un état de blocage, les bobines de fil (20) pouvant être tournées par rapport à l'arbre d'entraînement (12) dans un état de libération de l'unité de blocage (54) à l'intérieur de l'unité de boîtier (24) respective, respectivement pour une reprise des fils de coupe (22).

2. Dispositif de coupe et/ou d'élagage (10) selon la revendication 1, **caractérisé en ce que** les unités de boîtier (24) présentent chacune un élément de boîtier (40) de type anneau et au moins un élément de recouvrement (42) qui, dans un état monté, forme avec l'élément de boîtier (40) respectif au moins partiellement un espace intérieur (44) fermé pour recevoir la bobine de fil (20) respective.

3. Dispositif de coupe et/ou d'élagage (10) selon la revendication 2, **caractérisé en ce que** l'élément de recouvrement (42) est relié à la bobine de fil respective (20).

4. Dispositif de coupe et/ou d'élagage (10) selon la revendication 3, **caractérisé en ce que** les unités de boîtier (24) présentent chacune un autre élément de recouvrement (46) qui est agencé en face de l'élément de recouvrement (42) respectif.

5. Dispositif de coupe et/ou d'élagage (10) selon la revendication 4, **caractérisé en ce que** l'autre élément de recouvrement (46) est agencé de manière à pouvoir tourner par rapport à l'élément de recouvrement respectif (42).

6. Dispositif de coupe et/ou d'élagage (10) selon l'une quelconque des revendications précédentes, **caractérisé en ce que** les ouvertures de passage de fil (26) présentent chacune une direction d'extension (66) qui est orientée selon un angle (64) inférieur à 90° par rapport à une paroi extérieure radiale (50) de l'unité de boîtier respective (24), notamment des éléments de boîtier (40).

7. Dispositif de coupe et/ou d'élagage (10) selon l'une quelconque des revendications précédentes, **caractérisé en ce que** les unités de boîtier (24), notamment les éléments de boîtier (40), présentent chacun une encoche de guidage de fil (52) s'étendant dans la direction périphérique, se raccordant à l'ouverture de passage de fil (26) et notamment effilée.

8. Dispositif de coupe et/ou d'élagage (10) selon l'une quelconque des revendications précédentes, **caractérisé en ce que** les modules (14, 16. 62) présentent chacun exactement une ouverture de passage de fil (26).

9. Dispositif de coupe et/ou d'élagage (10) selon l'une quelconque des revendications précédentes, **caractérisé en ce que** les ouvertures de passage de fil (26) de modules voisins (14, 16, 62) sont agencées en décalage angulairement les unes par rapport aux autres par rapport à l'axe de rotation (18), notamment d'un angle de 180°.

10. Dispositif de coupe et/ou d'élagage (10) selon l'une quelconque des revendications précédentes, **caractérisé en ce que** les unités de boîtier (24) présentent chacune au moins un logement de fil (58) qui, lorsque le fil de coupe (22) est reçu, est prévu pour fournir une liaison agissant notamment parallèlement à une direction axiale (60) respective avec la bobine de fil (20) respective.

11. Dispositif de coupe et/ou d'élagage (10) selon l'une quelconque des revendications précédentes, **caractérisé en ce que** tous les modules (14, 16, 62) sont réalisés identiques les uns aux autres.
